(19) Europäisches Patentamt
European Patent Office
Office européen des brevets

(11) **EP 2 146 861 B1**

(12) **EUROPÄISCHE PATENTSCHRIFT**

(45) Veröffentlichungstag und Bekanntmachung des Hinweises auf die Patenterteilung:
**26.12.2012 Patentblatt 2012/52**

(51) Int Cl.:
***B60K 35/00*** *(2006.01)*

(21) Anmeldenummer: 08736342.0

(22) Anmeldetag: **17.04.2008**

(86) Internationale Anmeldenummer:
**PCT/EP2008/054685**

(87) Internationale Veröffentlichungsnummer:
**WO 2008/125694 (23.10.2008 Gazette 2008/43)**

(54) **ANZEIGEEINRICHTUNG FÜR EIN FAHRZEUG ZUM ANZEIGEN VON DEN BETRIEB DES FAHRZEUGS BETREFFENDE INFORMATIONEN UND VERFAHREN ZUM ANZEIGEN DIESER INFORMATIONEN**

DISPLAY DEVICE FOR A VEHICLE FOR THE DISPLAY OF INFORMATION RELATING TO THE OPERATION OF THE VEHICLE AND METHOD FOR THE DISPLAY OF THE INFORMATION THEREOF

DISPOSITIF D'AFFICHAGE POUR VÉHICULE DESTINÉ À AFFICHER LES INFORMATIONS CONCERNANT LE FONCTIONNEMENT DU VÉHICULE ET PROCÉDÉ D'AFFICHAGE DE CES INFORMATIONS

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **17.04.2007 DE 102007018072**

(43) Veröffentlichungstag der Anmeldung:
**27.01.2010 Patentblatt 2010/04**

(73) Patentinhaber: **Volkswagen Aktiengesellschaft 38440 Wolfsburg (DE)**

(72) Erfinder:
• **HOFMANN, Robert**
  **10823 Berlin (DE)**
• **HOFMANN, Gustav**
  **38114 Braunschweig (DE)**
• **HAN, Sun Kyoung**
  **14195 Berlin (DE)**
• **KUHN, Mathias**
  **14109 Berlin (DE)**
• **AMANN, Marc**
  **10435 Berlin (DE)**
• **DEHMANN, Rainer**
  **10963 Berlin (DE)**

(74) Vertreter: **Reitstötter - Kinzebach Patentanwälte Sternwartstrasse 4 81679 München (DE)**

(56) Entgegenhaltungen:
| | |
|---|---|
| EP-A- 1 080 976 | EP-A- 1 582 393 |
| WO-A-2005/080139 | WO-A-2005/120880 |
| WO-A2-2005/089403 | JP-A- 10 297 318 |
| US-A- 4 442 424 | US-A1- 2002 085 043 |
| US-A1- 2002 159 632 | US-A1- 2003 044 081 |
| US-B1- 6 346 942 | |

**Beschreibung**

Die vorliegende Erfindung betrifft eine Anzeigeeinrichtung für ein Fahrzeug zum Anzeigen von dem Betrieb des Fahrzeugs betreffende Informationen mit einem Display, zumindest einem Rundinstrument, das im Bereich des Displays oder auf dem Display einem Betrachter anzeigbar ist, und einer Steuereinrichtung, welche die Anzeige auf dem Display und des Rundinstruments steuert. Ferner betrifft die Erfindung ein Verfahren zum Anzeigen von solchen Informationen in einem Fahrzeug mittels einer Anzeigeeinrichtung mit einem Display und zumindest einem Rundinstrument, das im Bereich des Displays oder auf dem Display einem Betrachter anzeigbar ist.

Die Anzahl von Informationen, die einem Fahrzeugführer aufgrund der steigenden Anzahl von Komforteinrichtungen angezeigt werden steigt ständig. Zu den Komforteinrichtungen, die in modernen Fahrzeugen eingesetzt werden zählen Navigationseinrichtungen, Telekommunikationseinrichtungen, Fahrerassistenzsystemen und Warnhinweise zu eine Vielzahl von Einrichtungen des Fahrzeugs und zu Umgebungsbedingungen. In vielen Fahrzeugen werden deshalb so genannte Multifunktions-Bedien- und Anzeigeeinrichtungen eingesetzt. Herkömmlicherweise ist das Display solcher Multifunktions-Bedien- und Anzeigeeinrichtungen in der Mittelkonsole angeordnet. Des Weiteren weisen solche Fahrzeuge ein so genanntes Kombiinstrument nahe des primären Sichtfeldes des Fahrzeugführers auf, welches dynamische Informationen und Überwachungsinformationen anzeigt, auf welche der Fahrzeugführer ggfs. unmittelbar reagieren soll. Neuerdings weisen die Kombiinstrumente neben herkömmlichen Rundinstrumenten auch frei programmierbare Displays auf, welche Informationen einer Navigationseinrichtung, einer Telekommunikationseinrichtung und insbesondere der Fahrerassistenzsysteme darstellen. Die Darstellung umfassender Informationen im Kombiinstrument des Fahrzeugs hat den Vorteil, dass der Fahrzeugführer zur Wahrnehmung der dargestellten Informationen seinen Blick nur geringfügig vom Fahrgeschehen abwenden muss.

Wenn zu umfassende Informationen im Kombiinstrument dargestellt werden, ergibt sich allerdings das Problem, dass der Fahrzeugführer die gewünschte Information nicht mehr schnell und intuitiv erfassen kann und von der Informationsfülle auf dem Display des Kombiinstruments vom Fahren abgelenkt wird. Aus diesem Grund wird an neuen Konzepten gearbeitet, wie Informationen mittels Anzeigeeinrichtungen in einem Fahrzeug, insbesondere mittels des Kombiinstruments, in der Nähe des Blickfeldes des Fahrzeugführers dargestellt werden können. Bei der Informationsdarstellung ist es besonders wichtig, dass der Fahrzeugführer die Informationen so schnell und intuitiv wie möglich aufnehmen kann. Gleichzeitig sollten solche Informationen angezeigt werden, die für den Fahrzeugführer in der jeweiligen Fahrsituation besonders relevant sind.

Aus der DE 43 07 367 A1 ist eine Anzeigeeinrichtung für ein Fahrzeug bekannt, die einen Bildschirm aufweist, der einen Bereich umfasst, in dem eine über Bedienelemente aufgerufene, frei wählbare Zustandsinformation in unterschiedlicher, vom Bediener wählbarer Form anzeigbar ist.

Aus der DE 199 02 136 B4 ist ein Kombiinstrument für ein Fahrzeug bekannt, die zwei Anzeigetafeln aufweist, wobei die zweite Anzeigetafel eine niedrigere Luminanz als die erste Anzeigetafel besitzt, wobei die beiden Anzeigetafel miteinander kombiniert sind. Das Kombiinstrument weist einen Verdunklungsfilter auf, dessen Transparenz in Wellenlängenbereichen hoch gewählt ist, die einem Wellenlängenbereich des von der zweiten Anzeigetafel emittierten Lichts und einem Wellenlängenbereich von Licht entspricht, das eine Farbe besitzt, die komplementär zu einer Farbe des Lichts ist, das von der zweiten Anzeigetafel emittiert wird.

Weitere Kombiinstrumente für Fahrzeuge sind z. B. aus der EP 1 190 886 A2, der EP 1 559 995 A1 und der WO 03/057522 A1 bekannt.

Werden im Kombiinstrument weiterhin analoge Anzeigeelemente wie die Rundinstrumente für die Anzeige der Motordrehzahl und die Anzeige der Geschwindigkeit verwendet, ergibt sich das Problem, dass auf dem Display nur eine begrenzte Fläche zur Darstellung weiterer Informationen zur Verfügung steht.

Die US 4,442,424 beschreibt eine Anzeigeeinrichtung für ein Fahrzeug, bei der in einem Anzeigezustand ein Rundinstrument für die Geschwindigkeit und daneben ein Rundinstrument für die Motordrehzahl angezeigt wird. Die Rundinstrumente umfassen jeweils eine Skala mit Geschwindigkeits- bzw. Drehzahlwerten sowie jeweils einer Einheit für die Skala. In einem anderen Anzeigezustand wird statt des Rundinstruments für die Geschwindigkeit der Wert der Geschwindigkeit anhand einer digitalen Anzeige wiedergegeben, die den Geschwindigkeitswert und die Einheit enthält.

In der JP 10297318 A wird eine Anzeigeeinrichtung für ein Fahrzeug beschrieben, bei der in einem Anzeigemodus ein Rundinstrument für die Geschwindigkeit angezeigt wird. In einem anderen Anzeigemodus wird dieses Rundinstrument nicht mehr angezeigt. Stattdessen wird die Geschwindigkeit durch eine digitale Anzeige wiedergegeben. Ferner wird eine Information, die vorher innerhalb des Rundinstruments angezeigt wurde, in einem anderen Anzeigebereich des Displays angezeigt.

Des Weiteren ist in der EP 1 582 393 A2, die den Oberbegriff des Anspruchs 1 offenbart, eine Anzeigeeinrichtung für ein Fahrzeug beschrieben, bei der in einem Anzeigemodus zwei Rundinstrumente für die Fahrzeuggeschwindigkeit und die Motordrehzahl angezeigt werden. Innerhalb der Rundinstrumente werden Informationen eines Fahrerassistenzsystems und einer Multifunktionsanzeige angezeigt. In einem anderen Anzeigemodus werden die beiden Rundinstrumente verkleinert und weiter außen auf der Anzeigefläche dargestellt, wobei die innerhalb der Rundinstrumente dargestellte Information verschwindet und stattdessen zum Teil in einem anderen Anzeigebereich dargestellt wird.

Schließlich beschreibt die WO 2005/080139 A1 eine Anzeigeeinrichtung für ein Fahrzeug, bei der die digitale Karte eines Navigationssystems in einen Bereich hinein vergrößert wird, in dem vorher ein Rundinstrument für die Geschwindigkeit angezeigt wird. Nach der Vergrößerung der digitalen Karte wird statt des Rundinstruments für die Geschwindigkeit eine digitale Anzeige für die Geschwindigkeit wiedergegeben.

Es ist die Aufgabe der vorliegenden Erfindung, eine Anzeigeeinrichtung der eingangs genannten Art und ein Verfahren zum Anzeigen von Informationen in einem Fahrzeug bereitzustellen, mit denen vielfältige Informationen so angezeigt werden, dass ein Betrachter im Fahrzeug sie schnell erfassen kann.

Erfindungsgemäß wird diese Aufgabe durch eine Anzeigeeinrichtung mit den Merkmalen des Anspruchs 1 und ein Verfahren mit den Merkmalen des Anspruchs 13 gelöst. Vorteilhafte Aus- und Weiterbildungen ergeben sich aus den Unteransprüchen.

Die erfindungsgemäße Anzeigeeinrichtung weist eine Steuereinrichtung auf, die ausgelegt ist, die Anzeigeeinrichtung so anzusteuern, dass sie einen ersten Anzeigemodus aufweist, bei dem das zumindest eine Rundinstrument dem Betrachter angezeigt wird und das Display einen Anzeigebereich innerhalb des Rundinstruments und einen Anzeigebereich außerhalb des Rundinstruments aufweist, und einen zweiten Anzeigemodus aufweist, bei dem das zumindest eine Rundinstrument dem Betrachter nicht angezeigt wird, die von dem Rundinstrument anzeigbare Information mittels einer digitalen Anzeige auf dem Displays wiedergegeben wird, und die im ersten Anzeigemodus innerhalb des Rundinstruments vom Display angezeigte Information in einem anderen Bereich des Displays angezeigt wird.

Vorteilhaft an den beiden von der erfindungsgemäßen Anzeigeeinrichtung bereitgestellten Anzeigemodi ist, dass die Informationsdarbietung an den Informationsinhalt angepasst werden kann, wobei jeweils der Anzeigemodus gewählt werden kann, bei welchem der Betrachter die dargebotenen Informationen so schnell und intuitiv wie möglich aufnehmen kann. Bei dem ersten Anzeigemodus wird dem Betrachter ein Rundinstrument angezeigt, an welches sich die meisten Fahrzeugführer so gewöhnt haben, dass sie die von dem Rundinstrument angezeigte Information sehr schnell erfassen können. Falls es jedoch erforderlich ist, komplexe Informationen in einem größeren Anzeigebereich darzustellen, ist es in dem zweiten Anzeigemodus möglich, das Rundinstrument auszublenden und auf diese Weise Anzeigefläche für komplexe Anzeigeinhalte zu gewinnen. Dabei wird die im ersten Anzeigemodus vom Rundinstrument angezeigte Information jedoch weiterhin digital angezeigt.

Gemäß einer bevorzugten Ausgestaltung der erfindungsgemäßen Anzeigeeinrichtung ist die im ersten Anzeigemodus außerhalb des Rundinstruments angezeigte Information im zweiten Anzeigemodus in einem größeren Anzeigebereich des Displays anzeigbar Ferner ist bevorzugt die im ersten Anzeigemodus innerhalb des Rundinstruments vom Display angezeigte Information im zweiten Anzeigemodus weiter außen anzeigbar. Auf diese Weise lassen sich komplexe Informationsinhalte, die eine größere Anzeigefläche erfordern, übersichtlicher und leichter erkennbar anzeigen.

Gemäß einer Weiterbildung der erfindungsgemäßen Anzeigeeinrichtung ist die im ersten Anzeigemodus in verkürzter Form anzeigbare Textinformation im zweiten Anzeigemodus in einem vergrößerten Anzeigebereich vollständig anzeigbar. Des Weiteren ist z. B. die im ersten Anzeigemodus alphanumerisch zentriert anzeigbare Information im zweiten Anzeigemodus seitlich verschoben anzeigbar. Ferner kann die im ersten Anzeigemodus alphanumerisch in mehreren Zeilen anzeigbare Information im zweiten Anzeigemodus so anzeigbar sein, dass zumindest eine Zeile dieser Information vertikal verschoben ist.

Gemäß einer bevorzugten Weiterbildung der erfindungsgemäßen Anzeigeeinrichtung sind im ersten Anzeigemodus zumindest zwei Rundinstrumente dem Betrachter anzeigbar. Das Display weist in diesem Fall jeweils einen Anzeigebereich innerhalb der Rundinstrumente und einen Anzeigebereich zwischen den beiden Rundinstrumenten auf. In diesem Fall werden im zweiten Betriebszustand die zwei Rundinstrumente dem Betrachter nicht angezeigt und das Display umfasst im zweiten Betriebszustand zumindest vier Anzeigebereiche: in einem ersten Anzeigebereich wird die von zumindest einem Rundinstrument anzeigbare Information digital angezeigt, in einem zweiten Anzeigebereich wird die im ersten Anzeigemodus innerhalb des ersten Rundinstruments vom Display angezeigte Information weiter außen angezeigt, in einem dritten Anzeigebereich wird die im ersten Anzeigemodus innerhalb des zweiten Rundinstruments vom Display angezeigte Information weiter außen angezeigt und in einem vierten Anzeigebereich wird die im ersten Anzeigemodus zwischen den beiden Rundinstrumenten vom Display angezeigte Information in einem größeren Anzeigebereich angezeigt.

Gemäß einer bevorzugten Ausgestaltung der erfindungsgemäßen Anzeigeeinrichtung ist ein mit der Steuereinrichtung gekoppeltes Bedienelement vorgesehen, durch welches von dem ersten Anzeigemodus in den zweiten Anzeigemodus und umgekehrt wechselbar ist.

Gemäß einer Ausgestaltung der erfindungsgemäßen Anzeigeeinrichtung wird das zumindest eine Rundinstrument auf dem Display bzw. von dem Display angezeigt.

Gemäß einer bevorzugten Weiterbildung der erfindungsgemäßen Anzeigeeinrichtung ist zumindest ein Rundinstrument eine beleuchtete und/oder selbstleuchtende elektromechanische Anzeigeeinheit. Das diese Anzeigeeinheit abbildende Licht ist in diesem Fall mittels einer Kombinationseinrichtung für den Betrachter im Bereich des Displays darstellbar. Des Weiteren ist bevorzugt eine Blende vorgesehen, die so ausgebildet ist, dass die zumindest eine elektromechanische Anzeigeeinheit bzw. das von dieser gebildete Rundinstrument für den Betrachter im Bereich des Displays zumindest zum Teil nicht mehr sichtbar ist.

Vorteilhaft an der Verwendung einer elektromechanischen Anzeigeeinheit, welche mittels der Kombinationseinrichtung für den Betrachter im Bereich des Displays darstellbar ist, ist, dass das Anzeigebild der elektromechanischen Anzeigeeinrichtung virtuell in einem Abstand vor dem Display projiziert wird, so dass virtuell zumindest teilweise ein dreidimensionales Bild erzeugt wird. Auf diese Weise wird in dem ersten Anzeigemodus die von dem Rundinstrument dargestellte Information für den Betrachter von dem Display abgesetzt, so dass der Betrachter den Informationsgehalt des Rundinstruments auch dann schnell und intuitiv erfassen kann, wenn auf dem Display komplexe Informationen angezeigt werden.

Die Erfindung betrifft ferner ein Kraftfahrzeug mit einem nahe des Sichtfelds eines Fahrers angeordneten Kombiinstrument, welches die vorstehend beschriebene Anzeigeeinrichtung umfasst.

Das erfindungsgemäße Verfahren umfasst die Schritte, dass in einem ersten Anzeigemodus der Anzeigeeinrichtung das zumindest eine Rundinstrument dem Betrachter angezeigt wird und das Display einen Anzeigebereich innerhalb des Rundinstruments und einen Anzeigebereich außerhalb des Rundinstruments aufweist und in einem zweiten Anzeigemodus der Anzeigeeinrichtung das zumindest eine Rundinstrument dem Betrachter nicht angezeigt wird, die von dem Rundinstrument anzeigbare Information mittels einer digitalen Anzeige des Displays wiedergegeben wird und die im ersten Anzeigemodus innerhalb des Rundinstruments auf dem Display angezeigte Information in einem anderen Anzeigebereich des Displays angezeigt wird.

Die im ersten Anzeigemodus außerhalb des Rundinstruments angezeigte Information kann im zweiten Anzeigemodus in einem größeren Anzeigebereich des Displays angezeigt werden. Die im ersten Anzeigemodus innerhalb des Rundinstruments vom Display angezeigte Information kann im zweiten Anzeigemodus weiter außen angezeigt werden. Ferner kann im ersten Anzeigemodus in verkürzter Form angezeigte Textinformation im zweiten Anzeigemodus in einem vergrößerten Anzeigebereich vollständig angezeigt werden. Des Weiteren kann im ersten Anzeigemodus alphanumerisch zentriert angezeigte Informationen im zweiten Anzeigemodus seitlich verschoben angezeigt werden. Schließlich kann im ersten Anzeigemodus alphanumerisch in mehreren Zeilen angezeigte Information im zweiten Anzeigemodus so angezeigt werden, dass zumindest eine Zeile dieser Information vertikal verschoben angezeigt wird.

Bevorzugt werden im ersten Anzeigemodus zumindest zwei Rundinstrumente dem Betrachter angezeigt, wobei das Display jeweils einen Anzeigebereich innerhalb der Rundinstrumente und einem Anzeigebereich zwischen den beiden Rundinstrumenten aufweist. In diesem Fall können bevorzugt im zweiten Anzeigemodus die zwei Rundinstrumente dem Betrachter nicht angezeigt werden und das Display die vorstehend beschriebenen vier Anzeigebereiche umfassen.

Bei dem erfindungsgemäßen Verfahrens wird bei einem Wechsel von dem ersten Anzeigemodus in den zweiten Anzeigemodus ein auf dem Display oder auf einem Teilbereich des Displays dargestelltes Anzeigebild durch Veränderung eines Bildparameters verändert, der wie folgt berechnet wird:

$$P_{n+1} = P_n + (P_m - P_n) \cdot F$$

Bei obiger Formel ist n eine natürliche Zahl, $P_0$ der Wert des Bildparameters der dargestellten Information im Ausgangszustand, $P_m$ eine Konstante und F ein Transformationsparameter.

Mit dem erfindungsgemäßen Verfahren kann eine Veränderung des Anzeigebildes erzeugt werden, welche sich an vielfältige Anzeigeinhalte anpassen lässt und bei welcher der Betrachter die Veränderung leicht nachvollziehen kann, so dass ihm die Orientierung im neuen Anzeigebild erleichtert wird. Auf diese Weise kann er die im neuen Anzeigebild dargestellte Information schnell und intuitiv erfassen.

Bei dem erfindungsgemäßen Verfahren verändert sich das Anzeigebild von einem Ausgangszustand zu einem Endzustand, wobei Zwischenbilder angezeigt werden. In diesem Fall läuft der Index n von 0 bis m, $P_0$ ist der Wert des Bildparameters der dargestellten Information im Ausgangszustand und $P_m$ der Wert des Bildparameters der dargestellten Information im Endzustand. Für den Transformationsparameter F gilt: 0 < F < 2. Für den Transformationsparameter F gilt jedoch insbesondere, dass er ungleich 1 ist. Bei dem erfindungsgemäßen Verfahren ist der Transformationsparameter F zwischen 1 und 2.

Mittels des Transformationsparameters F kann festgelegt werden, wie schnell sich das Anzeigebild vom Ausgangszustand in bestimmten Bereichen dem Endzustand annähert. Ist der Transformationsparameter zwischen 0 und 1 ergibt sich eine rasche Annäherung an den Endzustand mit abschließender Verzögerung. Kleinere Werte des Transformationsparameters führen dabei zu einer langsameren Annäherung als größere Werte des Transformationsparameters.

Für eine langsame Annäherung an den Endzustand hat sich für die Wiedergabe von Informationen in einem Fahrzeug für den Transformationsparameter F ein Bereich von 0,15 bis 0,25 als bevorzugt ergeben, wobei für eine langsame Annäherung ein Transformationsparameter von 0,2 besonders bevorzugt ist.

Für eine mittlere Annäherung an den Endzustand hat sich für die Darstellung von Informationen in einem Fahrzeug ein vorteilhafter Bereich von 0,45 bis 0,55 für den Transformationsparameter ergeben, wobei ein Wert von 0,5 bevorzugt ist.

Für eine schnelle Annäherung an den Endzustand hat sich für die Darstellung von Informationen in einem Fahrzeug für den Transformationsparameter ein Bereich von 0,88 bis 0,92 als vorteilhaft herausgestellt, wobei ein Wert von 0,9 bevorzugt ist.

Für erfindungsgemäße Werte des Transformationsparameters, die zwischen 1 und 2 liegen, ergibt sich eine oszillierende Annäherung an den Endzustand mit abschließender Verzögerung. Bei derartigen oszillierenden Annäherungen hat sich bei der Darstellung von Informationen in einem Fahrzeug als vorteilhaft herausgestellt, wenn der Transformationsparameter zwischen 1,25 und 1,35 liegt, wobei der Wert 1,3 bevorzugt ist, oder zwischen 1,45 und 1,55 liegt, wobei in diesem Fall 1,5 bevorzugt ist.

Gemäß einer Weiterbildung des erfindungsgemäßen Verfahrens ändert sich der Transformationsparameter zeitlich, es gilt somit $F = F(n)$, wenn n den Index für zeitlich aufeinanderfolgende Zwischenbilder angibt.

Gemäß einer anderen Ausgestaltung ist der Transformationsparameter größer als 2. In diesem Fall ist ein Abbruchkriterium für die Berechnung des Bildparameters definiert. Ist der Transformationsparameter größer als 2, ergibt sich nämlich eine oszillierende Entfernung von dem Ausgangszustand mit einer Beschleunigung. Kleinere Werte des Transformationsparameters führen dabei zu einer langsameren Entfernung vom Ausgangszustand als größere Werte des Transformationsparameters.

Gemäß einer weiteren Ausbildung ist der Transformationsparameter kleiner als Null, wobei auch in diesem Fall ein Abbruchkriterium für die Berechnung des Bildparameters definiert ist. Für negative Werte des Transformationsparameters ergibt sich eine Entfernung von dem Ausgangszustand in negativer Richtung mit Beschleunigung. Kleinere Absolutwerte des Transformationsparameters führen zu einer langsameren Entfernung vom Ausgangszustand und einer langsameren Beschleunigung als größere Absolutwerte des Transformationsparameters.

Für das Abbruchkriterium kann beispielsweise ein Schwellwert definiert werden, wobei bei der Berechnung des Bildparameters abgebrochen wird, wenn der Absolutwert des Bildparameters größer als dieser Schwellwert ist.

Bei der Auswahl des Transformationsparameters sind die Besonderheiten bei der Anzeige von Informationen im Fahrzeug zu berücksichtigen. Es hat sich herausgestellt, dass herkömmliche Veränderungen des Anzeigebildes, wie sie bei konventionellen Graphiken verwendet werden, bei einer Verwendung im Fahrzeug nachteilhaft sind, da sie entweder eine zu große Aufmerksamkeit des Betrachters erfordern oder eine Orientierung erschweren, wenn der Betrachter beim Übergang den Blick zwischenzeitlich abwendet. Es hat sich herausgestellt, dass die vorstehend angegebene Berechnungsformel für den Bildparameter und die angegebenen Wertebereiche und Werte des Transformationsparameters für eine Anwendung in einem Fahrzeug, insbesondere einem Kraftfahrzeug, besonders bevorzugt sind.

Der Bildparameter kann das Anzeigebild auf vielfältige Weise charakterisieren und verändern. Der Bildparameter kann beispielsweise die Position einer in einem Teilbereich des Anzeigebildes dargestellten Information sein. Ist in diesem Fall der Transformationsparameter zwischen 0 und 2, wandert die dargestellte Information von einem ersten Teilbereich des Anzeigebildes zu einem zweiten Teilbereich des Anzeigebildes, wobei beim Übergang vom Ausgangszustand zum Endzustand Zwischenbilder angezeigt werden. Die Veränderung zwischen zwei aufeinanderfolgenden Zwischenbildern wird von dem Transformationsparameter bestimmt. Der Transformationsparameter bestimmt in diesem Fall somit wie schnell in bestimmten Zeitintervallen sich der erste Teilbereich geometrisch dem zweiten Teilbereich annähert.

Ist der Transformationsparameter größer als 2 oder kleiner als Null kann ein Herauswandern der dargestellten Information, wie z. B. ein Herauswandern eines dargestellten Objekts aus dem Anzeigebild realisiert werden. Das Abbruchkriterium wird in diesem Fall dadurch bestimmt, dass die dargestellte Information nicht mehr im Anzeigebereich dargestellt wird.

Unter einer Positionsveränderung wird im Sinne der Erfindung sowohl eine Translation als auch eine Rotation sowie Kombinationen dieser beiden Operationen für eine im Anzeigebild dargestellte Information verstanden.

Gemäß einer anderen Ausgestaltung des erfindungsgemäßen Verfahrens betrifft der Bildparameter die Helligkeit einer auf dem Display dargestellten Information. Wenn der Transformationsparameter zwischen 0 und 2 ist, geht die Helligkeit der dargestellten Information somit von einer Ausgangshelligkeit in eine Endhelligkeit über, wobei beim

Übergang von der Ausgangshelligkeit in die Endhelligkeit Zwischenhelligkeiten angezeigt werden. Ist der Transformationsparameter in diesem Fall größer als 2 oder kleiner als Null kann ein Ausblenden der dargestellten Informationen durch einen Übergang in einen Zustand maximaler Helligkeit, z. B. ein weißes Bild, oder ein Zustand minimaler Helligkeit, z. B. ein schwarzes Bild, verwirklicht werden. Als Abbruchkriterium wird in diesem Fall ein bestimmter Maximal- oder Minimalwert für die Helligkeit definiert.

Gemäß einer weiteren Ausgestaltung des erfindungsgemäßen Verfahrens betrifft der Bildparameter die Farbe einer auf dem Display dargestellten Information. Für einen Transformationsparameter zwischen 0 und 2 geht in diesem Fall die Farbe der dargestellten Informationen von einer Ausgangsfarbe in eine Endfarbe über, wobei beim Übergang Zwischenfarben angezeigt werden. Der Begriff "Farbe" umfasst in diesem Fall sowohl den Farbton als auch die Farbsättigung.

Gemäß einer weiteren Ausgestaltung des erfindungsgemäßen Verfahrens betrifft der Bildparameter die Skalierung einer auf dem Display dargestellten Information. Für Transformationsparameter zwischen 0 und 2 kann somit die dargestellte Information vergrößert oder verkleinert werden.

Gemäß einer weiteren Ausgestaltung des erfindungsgemäßen Verfahrens betrifft der Bildparameter die Transparenz einer auf dem Display dargestellten Information. Für Transformationsparameter zwischen 0 und 2 kann somit eine einem anderen Bild überlagerte Information stärker sichtbar oder weniger sichtbar gemacht werden. Für Transformationsparameter, die kleiner als 0 oder größer als 2 sind, kann die dargestellte Information auch vollständig zum Verschwinden gebracht werden oder undurchsichtig gemacht werden.

Durch die Veränderung des Bildparameters kann insbesondere der Wechsel von dem ersten Anzeigemodus in den zweiten Anzeigemodus und umgekehrt gesteuert werden. Der Bildparameter kann steuern, wie sich Anzeigebereiche hinsichtlich ihrer Position, Skalierung, Farbe und/oder Transparenz verändern.

Auch bei der erfindungsgemäßen Anzeigeeinrichtung ist die Steuereinrichtung ausgelegt, die Anzeigeeinrichtung so anzusteuern, dass sich bei einer Veränderung des Anzeigebildes der Bildparameter wie vorstehend erläutert verändert.

Die Erfindung wird nun anhand von Ausführungsbeispielen mit Bezug zu den Zeichnungen erläutert.

| | |
|---|---|
| Figur 1 | zeigt schematisch die Anordnung eines Ausführungsbeispiels der erfindungsgemäßen Anzeigeeinrichtung in einem Fahrzeug, |
| Figur 2 | zeigt den Aufbau eines Ausführungsbeispiels der erfindungsgemäßen Anzeigeeinrichtung, |
| Figur 3 | zeigt die Anordnung des Displays, des Rundinstruments und der Kombinationseinrichtung eines Ausführungsbeispiels der erfindungsgemäßen Anzeigeeinrichtung, |
| die Figuren 4A und 4B | zeigen ein Beispiel einer Anzeige in dem ersten und in dem zweiten Anzeigemodus, |
| die Figuren 5A und 5B | zeigen ein weiteres Beispiel der Anzeige im ersten und zweiten Anzeigemodus. |
| Figur 6 | zeigt die Aufteilung der Anzeigebereiche des Displays und der Rundinstrumente des Ausführungsbeispiels der erfindungsgemäßen Anzeigeeinrichtung für den ersten Anzeigemodus, |
| Figur 7 | zeigt die Aufteilung der Anzeigebereiche des Displays des Ausführungsbeispiels der erfindungsgemäßen Anzeigeeinrichtung für den zweiten Anzeigemodus, |
| Figur 8 | zeigt ein Beispiel einer zeitlichen Veränderung des Bildparameters beim Wechsel zwischen den Anzeigemodi für einen Transformationsparameter $F = 0{,}5$. |
| Figur 9 | zeigt ein erfindungsgemäßes Beispiel einer zeitlichen Veränderung des Bildparameters beim Wechsel zwischen den Anzeigemodi für einen Transformationsparameter $F = 1{,}3$, |

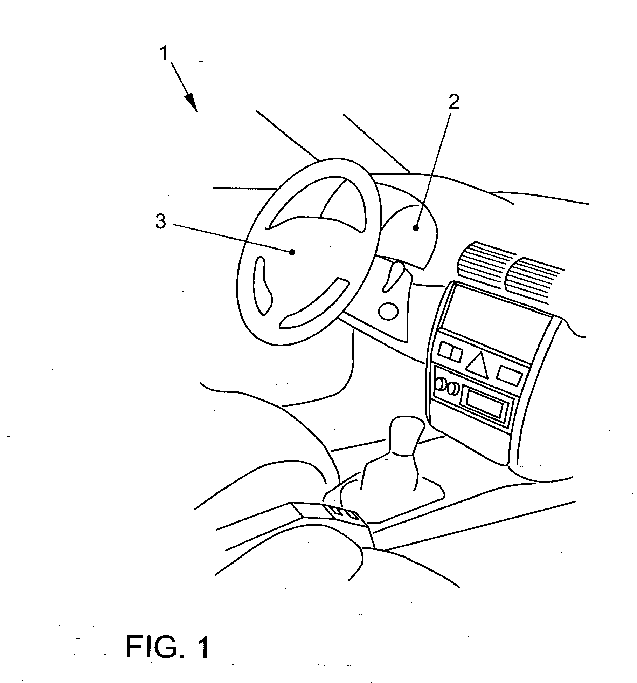

Figur 1 zeigt ein Beispiel einer Innenansicht eines Kraftfahrzeugs 1. In dem Kraftfahrzeug 1 ist hinter einem Lenkrad 3 eine als Kombiinstrument ausgebildete Anzeigeeinrichtung 2 angeordnet, deren Anzeige im Blickfeld bzw. in der Nähe des Blickfeldes des Fahrers liegt.

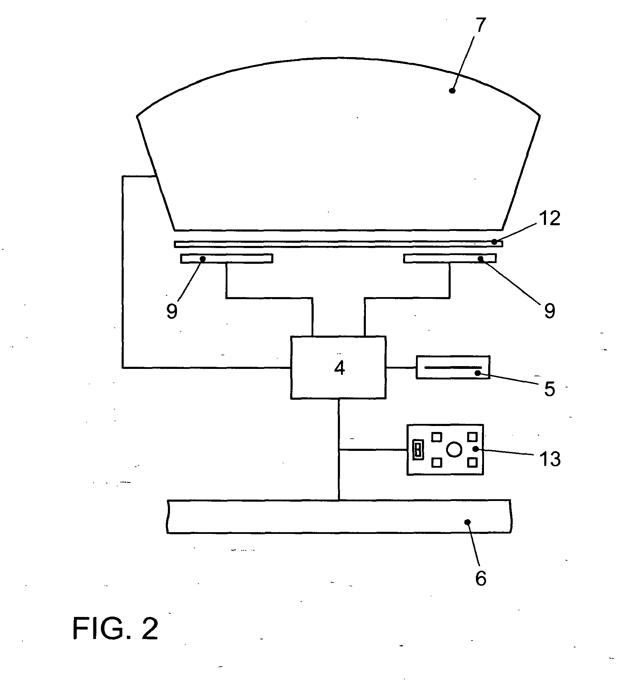

In Figur 2 ist der prinzipielle Aufbau der Anzeigeeinrichtung 2 dargestellt. Die Anzeigeeinrichtung 2 umfasst eine Steuereinrichtung 4, die datentechnisch mit einem Fahrzeugbus 6 verbunden ist. Auf diese Weise können der Steuereinrichtung 4 Daten übertragen werden, aus denen die Steuereinrichtung Graphikdaten für die Anzeige der Anzeigeeinrichtung 2 generieren kann. Ferner kann die Steuereinrichtung 4 auch über andere Schnittstellen Daten empfangen. Beispielsweise kann die Steuereinrichtung 4 direkt mit Sensoren und Steuergeräten des Fahrzeugs oder anderen Einrichtungen zur Erzeugung von Graphikdaten gekoppelt sein.

Des Weiteren ist die Steuereinrichtung 4 mit einem Datenspeicher 5 verbunden, aus dem für die Erzeugung der Graphikdaten erforderliche Daten ausgelesen werden können. Der Datenspeicher 5 kann beispielsweise eine oder mehrere digitale Straßenkarten enthalten. Ferner können in dem Datenspeicher 5 Voreinstellungen, Bildparameter und Stellwerte gespeichert sein.

Des Weiteren ist die Steuereinrichtung 4 mit einer Bedieneinheit 13 verbunden, welche ein Bedienelement oder mehrere Bedienelemente umfasst. Mittels der Bedieneinheit 13 kann ein Nutzer die Anzeigen und Darstellungen der Anzeigeeinrichtung 2 steuern.

Die Steuereinrichtung ist ferner mit einem frei programmierbaren Display 7 verbunden, welches verschiedene Anzeigebereiche aufweist. Ferner ist die Steuereinrichtung 4 mit zwei elektromechanischen Rundinstrumenten 9 verbunden.

Bei dem Display 7 kann es sich um ein Matrix-Display handeln, z. B. ein LCD (liquid crystal display), insbesondere ein Farbdisplay in TFT-(thin-film transistor)-Technik. Des Weiteren kann das Display in ein so genanntes twisted nematic-liquid crystal display (TN-LCD), ein super twisted nematic (STN) display, ein Doppelschicht-STN, ein FLC (ferroelectric liquid crystal) Display oder ein SSFLC (surface stabilized ferroelectric liquid crystal) sein. Dem Display 7 ist eine (nicht gezeigte) Hintergrundbeleuchtung zugeordnet, die durch eine oder mehrere lichtemittierende Dioden bereitgestellt werden kann.

Die Steuereinrichtung 4 steuert ferner auf an sich bekannte Weise zwei Rundinstrumente 9, welche z. B. für die Anzeige der Geschwindigkeit und Motordrehzahl vorgesehen sind. Die Rundinstrumente 9 umfassen eine Skala und einen Zeiger, dessen Drehwinkel von einem Steuersignal der Steuereinrichtung 4 bestimmt wird. Für die Rundinstrumente 9 ist jeweils separat eine Beleuchtung vorgesehen, die von dem Steuergerät ein- und ausgeschaltet werden kann. Das die Rundinstrumente 9 abbildende Licht kann vollständig oder teilweise mittels der Kombinationseinrichtung 10 für den Betrachter im Bereich des Displays 7 dargestellt werden. Auf diese Weise können die Rundinstrumente 9 mittels eines Steuersignals der Steuereinrichtung 4 im Bereich des Displays 7 dargestellt oder nicht dargestellt werden.

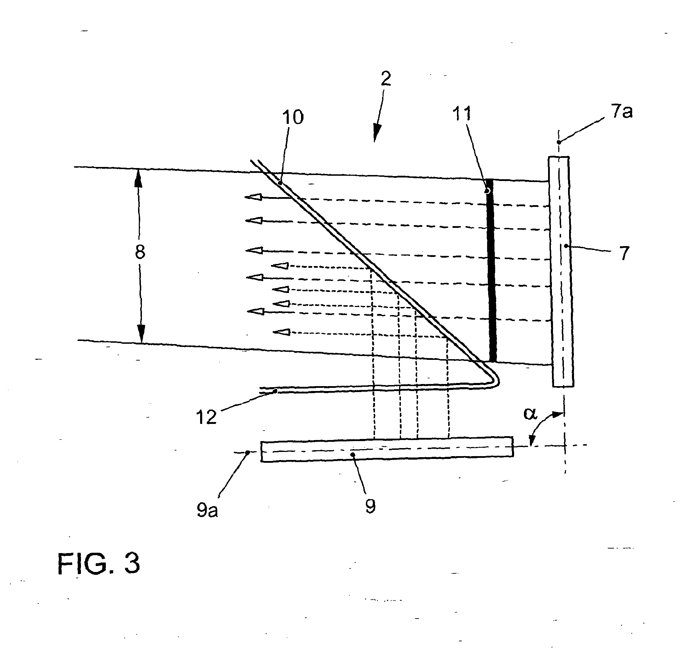

Im Folgenden wird mit Bezug zu Figur 3 die Anordnung des Displays 7, der Rundinstrumente 9 und der Kombinationseinrichtung 10 im Detail erläutert:

Das Display 7 der Anzeigeeinrichtung 2 ist so angeordnet, dass es im unmittelbaren Blickfeld 8 des Fahrers angeordnet ist, wie es in Figur 1 gezeigt ist. Die Rundinstrumente 9 sind in dem in Figur 3 gezeigten Ausführungsbeispiel horizontal unterhalb des Blickfelds 8 des Fahrers angeordnet, so dass sich die von den Rundinstrumenten 9 gebildete Ebene in Blickrichtung 8 des Fahrers auf das Display 7 liegt. Die Rundinstrumente 9 können insbesondere unterhalb des Blickfeldes 8 angeordnet sein. Die Rundinstrumente 9 sind wie in einem herkömmlichen Kombiinstrument aufgebaut und angeordnet. Die Skalen der Rundinstrumente 9 sind selbstleuchtend oder beleuchtet ausgeführt. Sie umfassen einen beleuchteten oder einen selbstleuchtenden drehbaren Zeiger zur Kenntlichmachung des aktuellen Wertes, der angezeigt werden soll.

Die Mittelachsen 7a und 9a des Displays 7 und der Rundinstrumente 9 sind vorteilhafterweise in einem Winkel a von 90° zueinander angeordnet. In einem Winkel von 45° von dem Rundinstrument 9 ist die Kombinationseinrichtung 10 vorgesehen.

Im in Figur 3 gezeigten Ausführungsbeispiel ist die Kombinationseinrichtung 10 ein planarer semitransparenter Spiegel, der für das abbildende Licht des Displays 7 durchlässig ausgebildet ist, so dass ein Betrachter die Anzeige des Displays direkt wahrnimmt. Das abbildende Licht der Rundinstrumente 9 wird von dem semitransparenten Spiegel 10 reflektiert, so dass es für den Betrachter in der Anzeige des Displays 7 als virtuelles Bild 11 vorgelagert erscheint. Zwischen der Kombinationseinrichtung 10 und dem Rundinstrument 9 ist eine Blende 12 aus semitransparentern Material vorgesehen, die für das abbildende Licht der Rundinstrumente 9 durchlässig ausgebildet ist und welche die Rundinstrumente 9 für den Betrachter zumindest im ausgeschalteten Zustand abdeckt. Die Steuereinrichtung 4 kann somit die Rundinstrumente 9 jeweils ein- und ausschalten, so dass sie für den Betrachter vor dem Display 7 dargestellt werden oder nicht dargestellt werden

Im eingeschalteten Zustand der Rundinstrumente 9, d. h. wenn diese leuchten oder beleuchtet werden, erscheint für den Betrachter ein virtuelles Bild 11 der Rundinstrumente 9 vor dem Display 7. Wenn die Rundinstrumente 9 ausgeschaltet sind verschwindet das virtuelle Bild 11 und die Rundinstrumente 9 sind für den Betrachter nicht sichtbar. Die Rundinstrumente 9 können selbstverständlich von der Steuereinrichtung 4 separat ein- und ausgeschaltet werden. Ferner kann die Blende 12 so ausgebildet sein, dass nur bestimmte Bereiche der Rundinstrumente 9 bzw. der zugehörigen Zeiger im virtuellen Bild 11 erscheinen. Im vorliegenden Ausführungsbeispiel jeweils ist nur ein radial äußerer Abschnitt der Zeiger im virtuellen Bild 11 sichtbar.

Gemäß einem anderen Ausführungsbeispiel werden die Rundinstrumente 9 von dem Display 7 angezeigt.

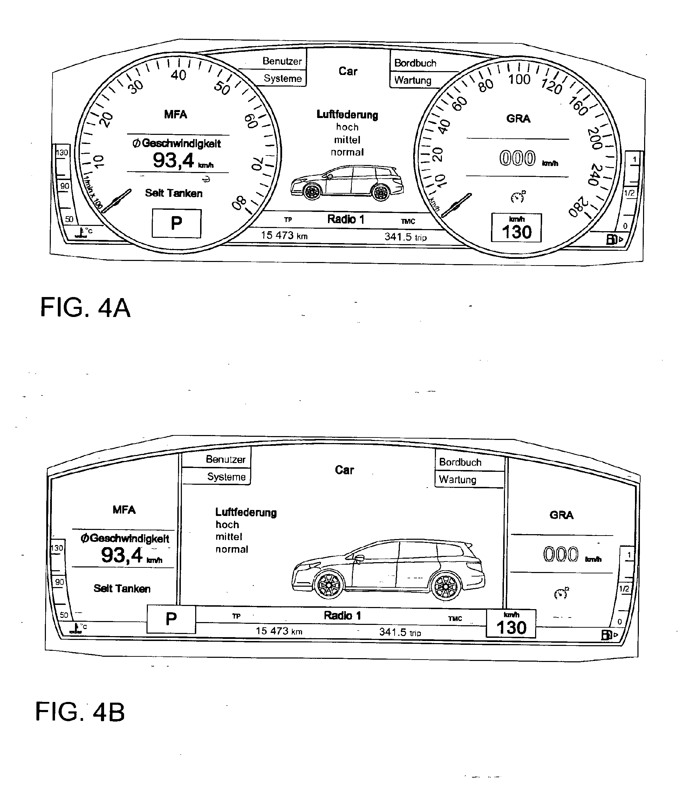

Mit Bezug zu den Figuren 4A bis 5B wird die Anzeige des Displays 7 und die Darstellung der Rundinstrumente 9 für verschiedene Anzeigemodi erläutert, wie sie bei dem Ausführungsbeispiel der erfindungsgemäßen Anzeigeeinrichtung und des erfindungsgemäßen Verfahrens einem Betrachter erscheinen:

Figur 4A zeigt die Ansicht auf die Anzeige der Anzeigeeinrichtung 2, wenn sich die Anzeigeeinrichtung 2 in dem ersten Anzeigemodus befindet. Die Steuereinrichtung 4 steuert die Rundinstrumente 9 so an, dass sie als virtuelles Bild beabstandet vor dem Display sichtbar sind. Das virtuelle Bild der Rundinstrumente 9 zeigt einen leuchtenden Ring in dem nach innen radial leuchtende Skalenstriche angeordnet sind. Ferner ist ein leuchtender Zeiger angezeigt. Der Zeiger erstreckt sich radial in Richtung der Skalenstriche. Es ist jedoch nur der radial äußere Abschnitt des Zeigers erkennbar, so dass innerhalb der Rundinstrumente ein frei verfügbarer Anzeigebereich des Displays 7 verbleibt.

Das linke Rundinstrument 9 zeigt auf an sich bekannte Weise die Motordrehzahl des Fahrzeugs und das rechte Rundinstrument 9 die Geschwindigkeit des Fahrzeugs an.

Das Display 7 wird von der Steuereinrichtung 4 so angesteuert, dass verschiedene Anzeigebereiche gebildet werden. Innerhalb des Rundinstruments 9 für die Motordrehzahl ist auf dem Display 7 ein Anzeigebereich für eine Multifunktionsanzeige (MFA) gebildet. In dem in Figur 4A gezeigten Beispiel wird die Durchschnittsgeschwindigkeit seit dem letzten Tanken angezeigt. Ferner werden von dem Display 7 Zahlenangaben für die Skala des Rundinstruments 9 für die Motordrehzahl dargestellt. Die Skala für die Motordrehzahl ist nicht zu einem vollständigen Ring geschlossen, sondern umfasst im unteren Bereich Kontrollanzeigen.

Links neben der Darstellung des Rundinstruments 9 für die Motordrehzahl umfasst das Display 7 einen Anzeigebereich für die Kühltemperaturanzeige.

Innerhalb des rechten Rundinstruments 9 für die Geschwindigkeit ist in dem Display 7 ein Anzeigebereich für Fahrerassistenzsysteme vorgesehen. In dem in Figur 4A gezeigten Beispiel werden Informationen der Geschwindigkeitsregelanlage (GRA) dargestellt. Ferner werden die zu der Skala des Rundinstruments 9 für die Geschwindigkeitsanzeige gehörigen Zahlenangaben angezeigt. Die Skala für die Geschwindigkeitsanzeige des Rundinstruments 9 ist nicht zu einem vollständigen Ring geschlossen, sondern umfasst im unteren Bereich eine digitale Anzeige der Fahrzeuggeschwindigkeit.

Rechts neben dem Rundinstrument 9 für die Geschwindigkeitsanzeige ist auf dem Display 7 ein Anzeigebereich für die Tankanzeige vorgesehen.

Zwischen den beiden Rundinstrumenten verbleibt ein Bereich, in dem variabel eine Vielzahl von Informationen, die in irgendeiner Weise den Betrieb des Fahrzeugs betreffen, angezeigt werden können.

In diesem Bereich können Hinweise des Navigationssystems, eine digitale Straßenkarte des Navigationssystems, Betriebsparameter des Fahrzeugs, Informationen zum Infotainmentsystem des Fahrzeugs einschließlich Informationen zu allen Multimediaeinrichtungen des Fahrzeugs, Informationen eines Telefons oder beliebige andere auswählbare oder automatisch anzeigbare Informationen des Fahrzeugs angezeigt werden. In dem in Figur 4A gezeigten Beispiel werden Informationen zur Luftfederung des Fahrzeugs angezeigt.

Im unteren Bereich des Anzeigebereichs zwischen den beiden Rundinstrumenten 9 sind zwei Statuszeilen untergebracht, in welcher die Gesamtkilometer, die Kilometer einer bestimmten Fahrt und spezielle Informationen des Infotainmentsystems angezeigt werden. Im oberen Bereich des Anzeigebereichs zwischen den beiden Rundinstrumenten 9 sind Schaltflächen zur Steuerung der Anzeigeeinrichtung 2 vorgesehen.

Die Anzeigeeinrichtung 2 lässt sich über die Bedieneinheit 13 steuern. Die Bedieneinheit 13 umfasst insbesondere ein Bedienelement, mit welchem zwischen dem ersten Anzeigemodus und dem zweiten Anzeigemodus gewechselt werden kann. Ferner ist es auch möglich, dass zwischen den Anzeigemodi automatisch mittels der Steuereinrichtung 4 gewechselt wird, wenn der dargestellte Informationsgehalt auf dem Display 7 dies erforderlich macht. Die Steuereinrichtung 4 kann in diesem Falle in Abhängigkeit von den in Speicher 5 gespeicherten Daten den Anzeigemodus automatisch wechseln.

In Figur 4B ist die zur Figur 4A gehörige Ansicht der Anzeigeeinrichtung 2 in dem zweiten Anzeigemodus gezeigt. Ein wesentlicher Unterschied des zweiten Anzeigemodus zu dem ersten Anzeigemodus ist, dass im zweiten Anzeigemodus die beiden Rundinstrumente 9 für den Betrachter nicht mehr sichtbar sind. Die Steuereinrichtung 4 hat die Beleuchtung der Rundinstrumente 9 ausgeschaltet, so dass aufgrund der Blende 12 das virtuelle Bild 11 der Rundinstrumente 9 im Bereich des Displays 7 für den Betrachter nicht mehr sichtbar ist. Dies hat zur Folge, dass die von der Steuereinrichtung 4 auf dem Display 7 gebildeten Anzeigebereiche so verändert werden können, dass sie eine Anzeige bereitstellen, welcher für den gegenwärtigen Anzeigeinhalt vom Fahrzeugführer schneller und intuitiver erfasst werden können. Gleichzeitig sollte zumindest für den Anzeigeinhalt eines Rundinstruments 9, nämlich den der Geschwindigkeitsanzeige, die vom Rundinstrument 9 anzeigbare Information mittels einer digitalen Anzeige des Displays wiedergegeben wird. Ferner sollte sichergestellt sein, dass der Fahrzeugführer beim Übergang vom ersten Anzeigemodus zum zweiten Anzeigemodus und umgekehrt nicht die Orientierung verliert.

In dem in Figur 4B gezeigten Beispiel wird die Geschwindigkeitsanzeige des Rundinstruments 9 weiterhin in dem Anzeigebereich des Displays 7 wiedergegeben, in dem bereits im ersten Anzeigemodus die Geschwindigkeit digital angezeigt wurde. Hierdurch wird dem Fahrzeugführer die Orientierung erleichtert, wenn das analoge Rundinstrument im zweiten Anzeigemodus verschwindet. Er kann sich weiterhin an der digitalen Geschwindigkeitsanzeige orientieren, die bereits im ersten Anzeigemodus angezeigt wurde.

Des Weiteren wandern die im ersten Anzeigemodus innerhalb der beiden Rundinstrumente 9 vom Display 7 angezeigten Informationen im zweiten Anzeigemodus in einen anderen Anzeigebereich des Displays 7, sie wandern nämlich nach außen. Dabei bleibt die horizontale Ausrichtung dieser Anzeigeinhalte jedoch erhalten. Auch hierdurch wird dem Fahrzeugführer eine Unterstützung für die Orientierung beim Wechsel zwischen den beiden Anzeigemodi gegeben.

Nachdem die Rundinstrumente 9 im zweiten Anzeigemodus nicht mehr als virtuelles Bild 11 vor dem Display 7 dargestellt werden und der Anzeigeinhalt der im ersten Anzeigemodus innerhalb der Rundinstrumente dargestellt wird, nach außen verlagert wurde, ergibt sich im Anzeigebereich in der Mitte des Displays 7 ein größerer Anzeigebereich für die Anzeigeinhalte, die im ersten Anzeigemodus zwischen den beiden Rundinstrumenten 9 dargestellt sind. Auf diese Weise lässt sich im zweiten Anzeigemodus in diesem Anzeigebereich eine sehr viel übersichtlichere, besser erkennbare und detailliertere Informationsdarstellung realisieren.

In Figur 4B ist gezeigt wie sich im zweiten Anzeigemodus der mittlere Anzeigebereich verändert. Die Darstellung des Fahrzeugs wird erheblich vergrößert. Die Textinformation zur Luftfederung, die im ersten Anzeigemodus zentriert dargestellt worden ist, rückt auf die linke Seite dieses mittleren Anzeigebereichs und wird linksbündig dargestellt. Dabei bleibt die horizontale Ausrichtung erneut erhalten, um dem Fahrzeugführer die Orientierung bei einem Wechsel zwischen den beiden Anzeigemodi zu erleichtern.

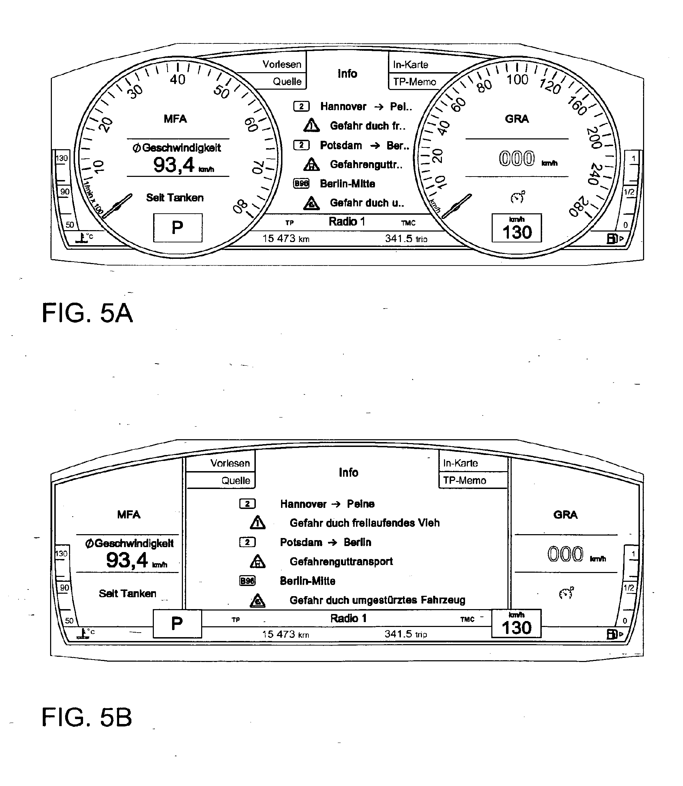

In den Figuren 5A und 5B ist ein weiteres Beispiel einer Ansicht der Anzeigeeinrichtung 2 im ersten und zweiten Anzeigemodus gezeigt. Im mittleren Anzeigebereich zwischen der Darstellung der beiden Rundinstrumente 9 werden Verkehrsinformationen des Navigationssystems angezeigt. Im ersten Anzeigemodus (Figur 5A) reicht die Größe dieses Anzeigebereichs nicht aus, um die alphanumerisch dargestellten Verkehrsinformationen vollständig anzuzeigen Beim Übergang in den zweiten Anzeigemodus (Figur 5B) vergrößert sich der mittlere Anzeigebereich, so dass die alphanumerischen Verkehrsinformationen vollständig ausgeschrieben dargestellt werden können. Ferner wäre es möglich, dass eine Zeile, die im ersten Anzeigemodus alphanumerische Informationen enthält, im zweiten Anzeigemodus vertikal verschoben angezeigt wird. Beispielsweise können im zweiten Anzeigemodus zwei Zeilen des ersten Anzeigemodus zu einer Zeile zusammengefasst werden.

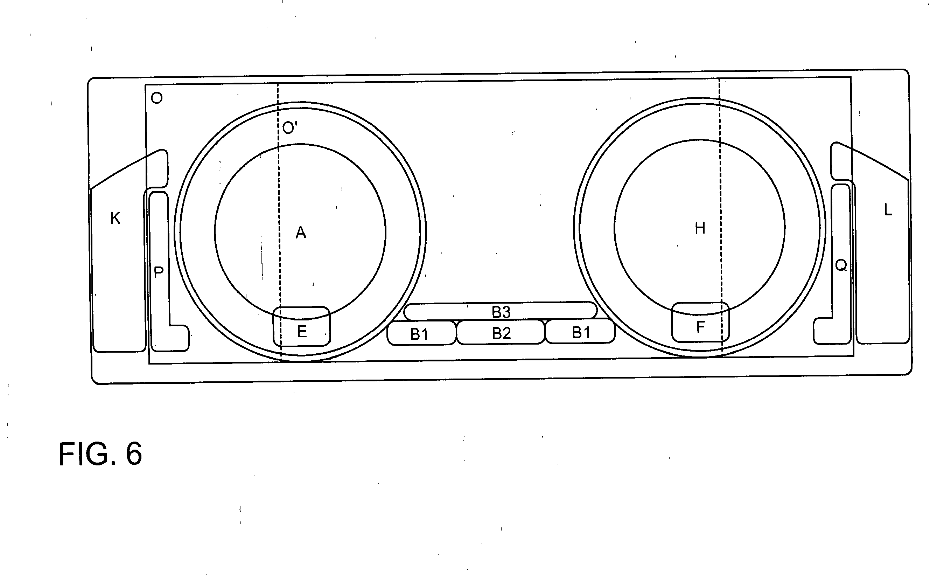

Mit Bezug zu Figur 6 werden im Folgenden nochmals die Anzeigebereiche des ersten Anzeigemodus erläutert. Dabei ist zu beachten, dass es sich bei der Figur 6 um keine maßgetreue Abbildung handelt.

Mit O ist die Gesamtanzeigefläche des Displays 7 bezeichnet. Mit O' ist der Anzeigebereich des Infotainmentsystems bezeichnet, welcher auch den Anzeigebereich zwischen den Rundinstrumenten umfasst. Der Anzeigebereich A innerhalb des Rundinstruments 9 für die Motordrehzahl wird als primärer Warnbereich, als Multifunktionsanzeige, für Pfeildarstellungen des Navigationssystems, für einen Kompass oder ähnliches verwendet.

Der Anzeigebereich P links außen neben dem Rundinstrument 9 für die Motordrehzahl wird für die Kühltemperaturanzeige genutzt. Ferner kann ein Bereich K vorgesehen sein, der zum Teil außerhalb der Gesamtanzeigefläche O des Displays 7 liegt, welcher für Kontrollanzeigen genutzt wird.

Der Anzeigebereich E im Bereich des Rundinstruments 9 für die Motordrehzahl, welcher sich im Bereich der nicht vollständigen Skala für die Motordrehzahl befindet, wird für eine Wählbereichsanzeige genutzt.

Der Anzeigebereich H innerhalb des Rundinstruments 9 für Geschwindigkeitsanzeige wird für Anzeigen der Fahrerassistenzsysteme genutzt, wie z. B. für Anzeigen der Geschwindigkeitsregelanlage und eines Abstandsregeltempomaten (adapted cruise control, ACC).

Der Anzeigebereich F innerhalb der nicht vollständig ringförmigen Skala für die Geschwindigkeitsanzeige des Rundinstruments 9 wird für die digitale Geschwindigkeitsanzeige genutzt. Der Anzeigebereich Q rechts außen neben dem Rundinstrument 9 für die Geschwindigkeitsanzeige wird für die Tankanzeige genutzt. Ferner kann zum Teil außerhalb der Gesamtanzeigefläche O des Displays 7 ein Bereich L für Kontrollanzeigen vorgesehen sein.

Schließlich sind im Anzeigebereich O' für das Infotainmentsystem im unteren Bereich zwischen der Darstellung der beiden Rundinstrumente 9 Statuszeilen vorgesehen. Die Statuszeile B1 ist für Kilometeranzeigen und die Anzeige der Uhrzeit vorgesehen, die Statuszeile B2 ist für Kontrollanzeigen und Temperaturanzeigen, wie die Außentemperatur bzw. die Innentemperatur, vorgesehen und die Statuszeile B3 ist für weitere Anzeigen des Infotainmentsystems vorgesehen.

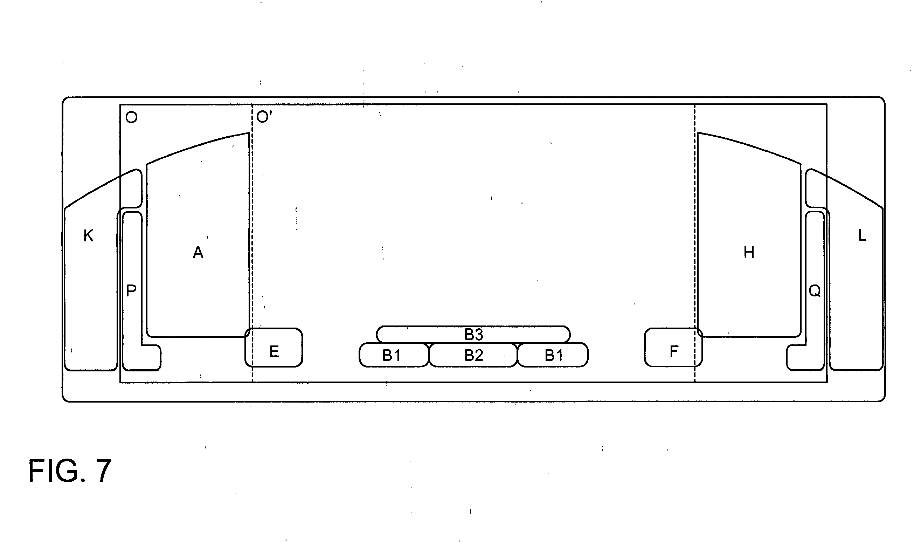

Mit Bezug zu Figur 7 werden die Anzeigebereiche des Displays 7 im zweiten Anzeigemodus erläutert. Auch in diesem Fall handelt es sich um keine maßgetreue Abbildung.

Die Anzeigebereiche O, O', P, K, E, F, Q, L, B1, B2 und B3 bleiben im Vergleich zum ersten Anzeigemodus unverändert. Dabei ist jedoch zu berücksichtigen, dass der Anzeigebereich O' nicht mehr von dem virtuellen Bild der Rundinstrumente 9 überlagert ist.

Die Anzeigebereiche A und H, die im ersten Anzeigemodus innerhalb der Rundinstrumente 9 angeordnet sind, rücken im zweiten Anzeigemodus jeweils nach außen, so dass sie sich nicht mehr mit dem Anzeigebereich O' überlappen. Der Anzeigebereich O' hat in beiden Anzeigemodi somit zwar die gleiche Größe. Im zweiten Anzeigemodus ist dieser Anzeigebereich O' jedoch nicht mehr von Teilen der Darstellung der Rundinstrumente 9 und Teilen der Anzeigebereiche A und H überlagert. Effektiv verbleibt im zweiten Anzeigemodus in dem Anzeigebereich O' für die Anzeigen des Infotainmentsystems eine sehr viel größere effektive Fläche zur Informationsdarstellung als im ersten Anzeigemodus.

Im Folgenden wird die Anzeige auf dem Display 7 bei einem Wechsel von dem ersten Anzeigemodus in den zweiten Anzeigemodus und umgekehrt erläutert. Dabei wird beispielhaft die Veränderung des geometrischen Ortes und der Skalierung einer Graphik beim Wechsel zwischen den Anzeigemodi beschrieben. Es können auf gleiche Weise jedoch auch andere Veränderungen des Anzeigebildes verwirklicht werden. Beispielsweise kann die Helligkeit, die Farbe oder die Transparenz oder Kombinationen dieser Bildparameter verändert werden.

Ein Bildparameter P charakterisiert bei der folgenden Beschreibung die geometrische Position der Graphik beim Übergang vom Ausgangszustand zum Endzustand sowie deren Skalierung. Die Zwischenbilder, die zwischen dem Ausgangszustand und dem Endzustand angezeigt werden, werden hinsichtlich des Bildparameters P wie folgt berechnet:

$$P_{n+1} = P_n + (P_m - P_n) \cdot F$$

Der Index n läuft in diesem Fall von 0 bis m. Der Wert des Bildparameters $P_0$ charakterisiert den geometrischen

EP 2 146 861 B1

Ort und die Skalierung der Graphik im Ausgangszustand. Der Bildparameter $P_m$ charakterisiert die Graphik hinsichtlich ihres Ortes und ihrer Skalierung im Endzustand. Mittels des Transformationsparameters F kann bestimmt werden, ob sich die Geschwindigkeitsanzeige dem Endzustand direkt annähert oder erfindungsgemäß oszillierend annähert. Ferner können die Beschleunigungen bei der Veränderung des Bildparameters eingestellt werden. Jeder Wert des Bildparameters $P_0$, $P_1$, $P_2$, ... , $P_m$ charakterisiert ein Zwischenbild. Das Zeitintervall zwischen zwei Zwischenbildem wird konstant gewählt. Die Anzeigebilder werden auf dem Display 7 somit mit einer festen Frequenz angezeigt.

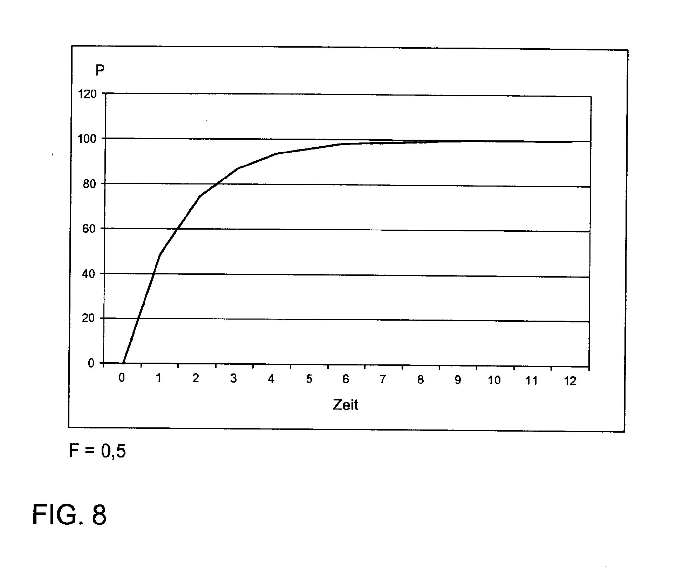

In Figuren 8 ist ein Beispiel für den Transformationsparameter F graphisch dargestellt. Figur 8 zeigt eine Kurve für F = 0,5. Der Bildparameter P ist in willkürlichen Einheiten dargestellt. Für den Ausgangszustand $P_0$ wurde ein Wert von 0 gewählt, für den Endzustand $P_m$ wurde ein Wert von 100 gewählt.

Wie aus Figur 8 ersichtlich zeigt die Kurve zunächst eine große Beschleunigung für die Annäherung an den Endzustand, die zunehmend abflacht. Insgesamt ist eine mittelschnelle Annäherung an den Endzustand gezeigt. Dabei ist die Beschleunigung zunächst relativ groß und verlangsamt sich mit der Zeit zunehmend. Der Endzustand wird erst nach 32 Anzeigebildern erreicht. Nach 9 Zwischenbildern hat sich der Anzeigezustand jedoch bereits auf 99 % dem Endzustand angenähert. Es wäre in einem solchen Fall möglich, ein Abbruchkriterium zu definieren, so dass die Iteration abgebrochen wird, wenn sich der Bildparameter P auf einen bestimmten Betrag an den Endzustand angenähert hat.

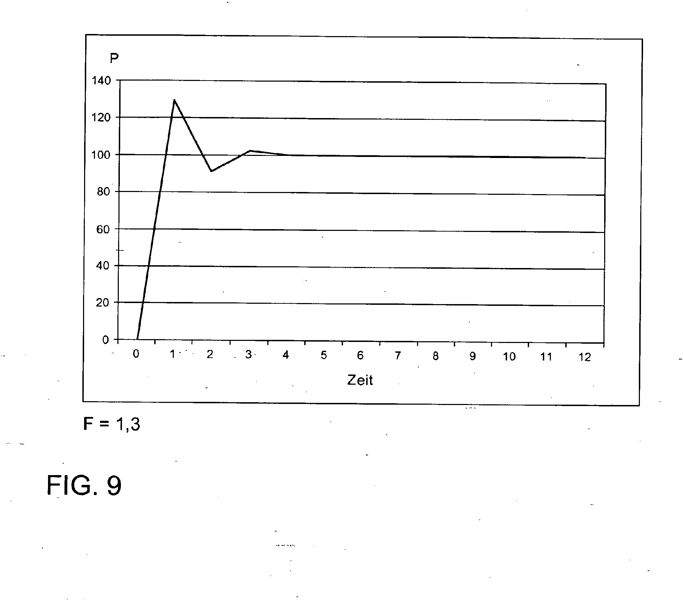

In der Figuren 9 ist eine erfindungsgemäße oszillierende Annäherung an den Endzustand gezeigt. Dabei wurde ein Transformationsparameter F = 1,3 gewählt. Es ergibt sich eine relativ schnelle oszillierende Annäherung an den Endzustand. Bereits nach fünf Bildern ist die Abweichung von dem Endzustand kleiner als 1 %. Nach achtzehn Anzeigebildern ist der Endzustand erreicht. Auch in diesem Fall könnte das vorstehend genannte Abbruchkriterium angewandt werden.

Eine oszillierende Annäherung an den Endzustand, wie sie durch die in Figur 9 gezeigte Kurve erreicht wird, ergibt eine Veränderung des Anzeigebildes, welche für den Betrachter sehr natürlich und wenig technisch erscheint. Es entspricht einem Federn, wie es der Betrachter von Vorgängen in seiner natürlichen Umgebung kennt. Hierdurch kann der Betrachter die Veränderung des Anzeigebildes leichter nachvollziehen, wodurch ihm die Orientierung beim Übergang vom Anfangszustand zum Endzustand erleichtert wird.

**BEZUGSZEICHENLISTE**

| | |
|---|---|
| 1 | Kraftfahrzeug |
| 2 | Anzeigeeinrichtung |
| 3 | Lenkrad |
| 4 | Steuereinrichtung |
| 5 | Datenspeicher |
| 6 | Fahrzeugbus |
| 7 | Display |
| 7a | Mittelachse des Displays |
| 8 | Blickfeld |
| 9 | Rundinstrument |
| 9a | Mittelachse des Rundinstruments |
| 10 | Kombinationseinrichtung |
| 11 | virtuelles Bild |
| 12 | Blende |
| 13 | Bedieneinheit |

**Patentansprüche**

1. Anzeigeeinrichtung (2) für ein Fahrzeug (1) zum Anzeigen von den Betrieb des Fahrzeugs (1) betreffende Informationen mit einem Display (7), zumindest einem Rundinstrument (9), das im Bereich des Displays (7) oder auf dem Display (7) einem Betrachter anzeigbar ist, und einer Steuereinrichtung (4), welche die Anzeige auf dem Display (7) und des Rundinstruments (9) steuert, wobei die Steuereinrichtung (4) ausgelegt ist, die Anzeigeeinrichtung (2) so anzusteuern, dass sie

- einen ersten Anzeigemodus aufweist, bei dem das zumindest eine Rundinstrument (9) dem Betrachter angezeigt wird und das Display (7) einen Anzeigebereich innerhalb des Rundinstruments (9) und einen Anzeigebereich außerhalb des Rundinstruments (9) aufweist, und

- einen zweiten Anzeigemodus aufweist, bei dem das zumindest eine Rundinstrument (9) dem Betrachter nicht angezeigt wird, die von dem Rundinstrument (9) anzeigbare Information mittels einer digitalen Anzeige des Displays (7) wiedergegeben wird und die im ersten Anzeigemodus innerhalb des Rundinstruments (9) vom Display (7) angezeigte Information in einem anderen Anzeigebereich des Displays (7) angezeigt wird,

**dadurch gekennzeichnet,**

- **dass** die Steuereinrichtung (4) so ausgelegt ist die Anzeigeeinrichtung (2) so anzusteuern, dass bei einem Wechsel von dem ersten Anzeigemodus in den zweiten Anzeigemodus ein Bildparameter verändert wird, der wie folgt berechnet wird:

$$P_{n+1} = P_n + (P_m - P_n) \cdot F$$

wobei n eine natürliche Zahl ist, $P_0$ der Wert des Bildparameters der dargestellten Information im Ausgangs-zustand ist, $P_m$ eine Konstante ist und den Wert des Bildparameters der dargestellten Information im Endzustand darstellt und F ein Transformationsparameter ist und wobei der Transformationsparameter zwischen 1 und 2 liegt.

2. Anzeigeeinrichtung (2) nach Anspruch 1,
   **dadurch gekennzeichnet,**
   **dass** die im ersten Anzeigemodus außerhalb des Rundinstruments (9) angezeigte Information im zweiten Anzeigemodus in einem größeren Anzeigebereich des Displays (7) anzeigbar ist.

3. Anzeigeeinrichtung (2) nach Anspruch 1 oder 2,
   **dadurch gekennzeichnet,**
   **dass** die im ersten Anzeigemodus innerhalb des Rundinstruments (9) vom Display (7) angezeigte Information im zweiten Anzeigemodus weiter außen anzeigbar ist.

4. Anzeigeeinrichtung (2) nach einem der Ansprüche 1 bis 3,
   **dadurch gekennzeichnet,**
   **dass** im ersten Anzeigemodus Textinformation in verkürzter Form anzeigbar ist, die im zweiten Anzeigemodus in einem vergrößerten Anzeigebereich vollständig anzeigbar ist.

5. Anzeigeeinrichtung (2) nach einem der Ansprüche 1 bis 4,
   **dadurch gekennzeichnet,**
   **dass** im ersten Anzeigemodus alphanumerische Information zentriert anzeigbar ist, die im zweiten Anzeigemodus seitlich verschoben anzeigbar ist.

6. Anzeigeeinrichtung (2) nach einem der vorstehenden Ansprüche,
   **dadurch gekennzeichnet,**
   **dass** im ersten Anzeigemodus alphanumerische Information in mehreren Zeilen anzeigbar ist, wobei im zweiten Anzeigemodus zumindest eine Zeile dieser Information vertikal verschoben anzeigbar ist.

7. Anzeigeeinrichtung (2) nach einem der vorstehenden Ansprüche,
   **dadurch gekennzeichnet,**
   **dass** im ersten Anzeigemodus zumindest zwei Rundinstrumente (9) dem Betrachter anzeigbar sind und das Display (7) jeweils einen Anzeigebereich innerhalb der Rundinstrumente (9) und einen Anzeigebereich zwischen den beiden Rundinstrumenten (9) aufweist.

8. Anzeigeeinrichtung (2) nach Anspruch 7,
   **dadurch gekennzeichnet,**
   **dass** im zweiten Anzeigemodus die zwei Rundinstrumente (9) dem Betrachter nicht angezeigt werden und dass das Display im zweiten Anzeigemodus zumindest vier
   Anzeigebereiche umfasst, wobei in einem ersten Anzeigebereich die von zumindest einem Rundinstrument (9) anzeigbare Information digital angezeigt wird, in einem dritten Anzeigebereich die im zweiten Anzeigemodus innerhalb des ersten Rundinstruments vom Display angezeigte Information weiter außen angezeigt wird, in einem dritten Anzeigebereich die im ersten Anzeigemodus innerhalb des zweiten Rundinstruments vom Display angezeigte Information weiter außen angezeigt wird und in einem vierten Anzeigebereich die im ersten Anzeigemodus zwischen den beiden Rundinstrumenten (9) vom Display (7) angezeigten Information in einem größeren Anzeigebereich angezeigt wird.

9.  Anzeigeeinrichtung (2) nach einem der vorstehenden Ansprüche,
    **dadurch gekennzeichnet,**
    **dass** ein mit der Steuereinrichtung (4) gekoppeltes Bedienelement vorgesehen ist, durch welches von dem ersten Anzeigemodus in den zweiten Anzeigemodus und umgekehrt wechselbar ist.

10. Anzeigeeinrichtung (2) nach einem der vorstehenden Ansprüche,
    **dadurch gekennzeichnet,**
    **dass** zumindest ein Rundinstrument (9) eine beleuchtete und/oder selbstleuchtende elektromechanische Anzeigeeinheit ist und dass das diese Anzeigeeinheit abbildende Licht mittels einer Kombinationseinrichtung (10) für den Betrachter im Bereich des Displays (7) darstellbar ist.

11. Anzeigeeinrichtung (2) nach Anspruch 10,
    dadurch gekenntzeichnet,
    dass eine Blende (12) vorgesehen ist, mit welcher die zumindest eine elektromechanische Anzeigeeinheit zumindest zum Teil ausblendbar ist, so dass das von dieser Anzeigeeinheit gebildete Rundinstrument (9) für den Betrachter im Bereich des Displays (7) zumindest zum Teil nicht mehr angezeigt wird.

12. Kraftfahrzeug mit einem nahe des Sichtfelds des Fahrers angeordneten Kombiinstrument, welches die Anzeigeeinrichtung (2) nach einem der vorstehenden Ansprüche umfasst.

13. Verfahren zum Anzeigen von den Betrieb eines Fahrzeugs (1) betreffende Informationen in einem Fahrzeug (1) mittels einer Anzeigeeinrichtung (2) mit einem Display (7) und zumindest einem Rundinstrument (9), das im Bereich des Displays (7) oder auf dem Display (7) einem Betrachter anzeigbar ist, bei dem

    - in einem ersten Anzeigemodus der Anzeigeeinrichtung (2) das zumindest eine Rundinstrument (9) dem Betrachter angezeigt wird und das Display (7) einen Anzeigebereich innerhalb des Rundinstruments (9) und einen Anzeigebereich außerhalb des Rundinstruments (9) aufweist und
    - in einem zweiten Anzeigemodus der Anzeigeeinrichtung (2) das zumindest eine Rundinstrument (9) dem Betrachter nicht angezeigt wird, die von dem Rundinstrument (9) anzeigbare Information mittels einer digitalen Anzeige auf dem Displays (7) wiedergegeben wird und die im ersten Anzeigemodus innerhalb des Rundinstruments (9) vom Display (7) angezeigte Information in einem anderen Anzeigebereich des Displays angezeigt wird,

    **dadurch gekennzeichnet, dass**

    - bei einem Wechsel von dem ersten Anzeigemodus in den zweiten Anzeigemodus ein Bildparameter verändert wird, der wie folgt berechnet wird:

$$P_{n+1} = P_n + (P_m - P_n) \cdot F$$

    wobei n eine natürliche Zahl ist, $P_0$ der Wert des Bildparameters der dargestellten Information im Ausgangszustand ist, $P_m$ eine Konstante ist und den Wert des Bildparameters der dargestellten information im Endzustand darstellt und F ein Transformationsparameter ist und wobei der Transformationsparameter zwischen 1 und 2 liegt.

14. Verfahren nach Anspruch 13,
    **dadurch gekennzeichnet,**
    **dass** im ersten Anzeigemodus zumindest zwei Rundinstrumente (9) dem Betrachter angezeigt werden und das Display (7) jeweils einen Anzeigebereich innerhalb der Rundinstrumente (9) und einen Anzeigebereich zwischen den beiden Rundinstrumenten (9) aufweist.

**15.** Verfahren nach Anspruch 14,
**dadurch gekennzeichnet,**
**dass** im zweiten Anzeigemodus die zwei Rundinstrumente (9) dem Betrachter nicht angezeigt werden und das Display (7) im zweiten Anzeigemodus zumindest vier Anzeigebereiche umfasst, wobei in einem ersten Anzeigebereich zumindest die von einem Rundinstrument (9) anzeigbare Information digital angezeigt wird, in einem zweiten Anzeigebereich die im ersten Anzeigemodus innerhalb des ersten Rundinstruments (9) vom Display angezeigte Information weiter außen angezeigt wird, in einem dritten Anzeigebereich die im ersten Anzeigemodus innerhalb des zweiten Rundinstruments (9) vom Display (7) angezeigte Information weiter außen angezeigt wird und in einem vierten Anzeigebereich die im ersten Anzeigemodus zwischen den beiden Rundinstrumenten (9) vom Display (7) angezeigte Information in einem größeren Anzeigebereich angezeigt wird.

**Claims**

**1.** Display device (2) for a vehicle (1) for displaying information relating to the operation of the vehicle (1), with a display (7), at least one round instrument (9) which can be displayed to a viewer in the vicinity of the display (7) or on the display (7), and a control device (4) which controls the representation on the display (7) and the round instrument (9), wherein the control device (4) is designed to actuate the display device (2) in such a way that said display device (2)

- has a first display mode in which the at least one round instrument (9) is displayed to the viewer, and the display (7) has a display area inside the round instrument (9) and a display area outside the round instrument (9), and
- has a second display mode in which the at least one round instrument (9) is not displayed to the viewer, the information which can be displayed by the round instrument (9) is represented by means of a digital representation on the display (7), and the information which is displayed inside the round instrument (9) of the display (7) in the first display mode is displayed in a different display area of the display (7),

**characterized**

- **in that** the control device (4) is designed to actuate the display device (2) in such a way that, at a changeover from the first display mode to the second display mode, an image parameter changes, said image parameter being calculated as follows:

$$P_{n+1} = P_n + (P_m - P_n) \cdot F$$

where n is a natural number, $P_0$ is the value of the image parameter of the displayed information in the initial state, $P_m$ is a constant and represents the value of the image parameter of the displayed information in the final state and F is a transformation parameter and wherein the transformation parameter is between 1 and 2.

**2.** Display device (2) according to Claim 1, **characterized**
**in that** the information which is displayed outside the round instrument (9) in the first display mode can be displayed in a relatively large display area of the display (7) in the second display mode.

**3.** Display device (2) according to Claim 1 or 2, **characterized**
**in that** the information which is displayed inside the round instrument (9) of the display (7) in the first display mode can be displayed further outward in the second display mode.

**4.** Display device (2) according to one of Claims 1 to 3,
**characterized**
**in that** text information which can be displayed in shortened form in the first display mode can be displayed completely in an enlarged display area in the second display mode.

**5.** Display device (2) according to one of Claims 1 to 4,
**characterized**
**in that** alphanumeric information which can be displayed in a centered fashion in the first display mode can be displayed shifted laterally in the second display mode.

6. Display device (2) according to one of the preceding claims, **characterized**
   **in that**, in the first display mode, alphanumeric information can be displayed in a plurality of lines, while, in the second display mode, at least one line of this information can be displayed shifted vertically.

7. Display device (2) according to one of the preceding claims, **characterized**
   **in that**, in the first display mode, at least two round instruments (9) can be displayed to the viewer, and the display (7) has respectively a display area inside the round instruments (9) and a display area between the two round instruments (9).

8. Display device (2) according to Claim 7, **characterized**
   **in that**, in the second display mode, the two round instruments (9) are not displayed to the viewer, and in that, in the second display mode, the display comprises at least four display areas, wherein, in a first display area, the information which can be displayed by at least one round instrument (9) is displayed in digital form, in a third display area the information which is displayed inside the first round instrument of the display in the second display mode is displayed further outward, in a third display area the information which is displayed inside the second round instrument of the display in the first display mode is displayed further outward, and in a fourth display area the information which is displayed between the two round instruments (9) of the display (7) in the first display mode is displayed in a relatively large display area.

9. Display device (2) according to one of the preceding claims, **characterized**
   **in that** an operator control element which is coupled to the control device (4), and by means of which it is possible to change from the first display mode into the second display mode and vice versa, is provided.

10. Display device (2) according to one of the preceding claims, **characterized**
    **in that** at least one round instrument (9) is an illuminated and/or self-illuminating electromechanical display unit, and in that the light which represents this display unit can be presented to the viewer in the vicinity of the display (7) by means of a combination device (10).

11. Display device (2) according to Claim 10, **characterized**
    **in that** a screen (12) is provided with which the at least one electromechanical display unit can be at least partially screened off, so that the round instrument (9) which is formed by this display unit is at least partially no longer displayed to the viewer in the vicinity of the display (7).

12. Motor vehicle having a combination instrument which is arranged near to the driver's field of vision and which comprises the display device (2) according to one of the preceding claims.

13. Method for displaying information relating to the operation of a vehicle (1), in a vehicle (1) by means of a display device (2) with a display (7) and at least one round instrument (9) which can be displayed to a viewer in the vicinity of the display (7) or on the display (7), in which

    - in a first display mode of the display device (2), the at least one round instrument (9) is displayed to the viewer, and the display (7) has a display area inside the round instrument (9) and a display area outside the round instrument (9), and
    - in a second display mode of the display device (2), the at least one round instrument (9) is not displayed to the viewer, the information which can be displayed by the round instrument (9) is represented by means of a digital representation on the display (7), and the information which is displayed inside the round instrument (9) of the display (7) in the first display mode is displayed in a different display area of the display, characterized when an image parameter is changed at the changeover from the first display mode to the second display mode, which image parameter is calculated as follows:

$$P_{n+1} = P_n + (P_m - P_n) \cdot F$$

where n is a natural number, $P_0$ is the value of the image parameter of the displayed information in the initial state, $P_m$ is a constant and represents the value of the image parameter of the displayed information in the final state and F is a transformation parameter and wherein the transformation parameter is between 1 and 2.

**14.** Method according to Claim 13,
**characterized**
**in that**, in the first display mode, at least two round instruments (9) can be displayed to the viewer, and the display (7) has respectively a display area inside the round instruments (9) and a display area between the two round instruments (9).

**15.** Method according to claim 14,
**characterized**
**in that**, in the second display mode, the two round instruments (9) are not displayed to the viewer, and in the second display mode, the display (7) comprises at least four display areas, wherein, in a first display area, at least the information which can be displayed by a round instrument (9) is displayed in digital form, in a second display area the information which is displayed inside the first round instrument (9) of the display in the first display mode is displayed further outward, in a third display area the information which is displayed inside the second round instrument (9) of the display (7) in the first display mode is displayed further outward, and in a fourth display area the information which is displayed between the two round instruments (9) of the display (7) in the first display mode is displayed in a relatively large display area.

**Revendications**

**1.** Dispositif d'affichage (2) de véhicule automobile (1) destiné à afficher des informations relatives au fonctionnement du véhicule automobile (1) à l'aide d'un écran (7), d'au moins un instrument rond (9) pouvant être affiché dans la zone de l'écran (7) ou sur l'écran (7) de façon à être vu d'un observateur ainsi que d'un dispositif de commande (4) commandant l'affichage de l'écran (7) et de l'instrument rond (9), le dispositif de commande (4) étant conçu pour commander de telle sorte le dispositif d'affichage (2) qu'il comporte :

un premier mode d'affichage dans lequel l'au moins un instrument (9) est affiché à la vue d'un observateur et dans lequel l'écran (7) comporte une zone d'affichage située à l'intérieur de l'instrument rond (9) et une zone d'affichage située à l'extérieur de l'instrument rond (9) ; et
un second mode d'affichage dans lequel l'au moins un instrument rond (9) n'est pas affiché à la vue d'un observateur, les informations pouvant être affichées par l'instrument rond (9) étant restituées sur l'écran (7) par le biais d'un affichage numérique et les informations affichées par l'écran (7) à l'intérieur de l'instrument (9) dans le premier mode d'affichage étant affichées dans une autre zone d'affichage de l'écran (7) ;
**caractérisé en ce que** :

le dispositif de commande (4) est conçu de façon à commander le dispositif d'affichage (2) pour qu'un paramètre d'image soit modifié lors du passage du premier mode d'affichage au second mode d'affichage, ledit paramètre étant calculé de la façon suivante :

$$P_{n+1} = P_n + (P_m - P_n) \cdot F$$

n étant un nombre entier naturel, $P_0$ la valeur du paramètre d'image des informations représentées à l'état de départ, $P_m$ une constante et la valeur du paramètre d'image des informations représentées à l'état final et F un paramètre de transformation, le paramètre de transformation étant compris entre 1 et 2.

**2.** Dispositif d'affichage (2) selon la revendication 1, **caractérisé en ce que** les informations affichées à l'extérieur de l'instrument rond (9) dans le premier mode d'affichage peuvent être affiché dans une zone d'affichage plus importante de l'écran (7) dans le second mode d'affichage.

3. Dispositif d'affichage (2) selon la revendication 1 ou 2, **caractérisé en ce que** les informations affichées par l'écran (7) à l'intérieur de l'instrument rond (9) dans le premier mode d'affichage peuvent être affichées davantage à l'extérieur dans le second mode d'affichage.

4. Dispositif d'affichage (2) selon l'une quelconque des revendications 1 à 3, **caractérisé en ce que** les informations de texte devant être affichées en mode abrégé dans le premier mode d'affichage peuvent être affichées dans leur totalité dans une zone d'affichage agrandie dans le second mode d'affichage.

5. Dispositif d'affichage (2) selon l'une quelconque des revendications 1 à 4, **caractérisé en ce que** des informations alphanumériques peuvent être affichées de façon centrée dans le premier mode d'affichage et être décalées en côté dans le second mode d'affichage.

6. Dispositif d'affichage (2) selon l'une quelconque des revendications précédentes, **caractérisé en ce que** des informations alphanumériques peuvent être affichées sur plusieurs lignes dans le premier mode d'affichage et qu'au moins une ligne parmi ces informations peut être affichée de façon décalée dans le plan vertical dans le second mode d'affichage.

7. Dispositif d'affichage (2) selon l'une quelconque des revendications précédentes, **caractérisé en ce qu'**au moins deux instruments ronds (9) peuvent être vus par l'observateur dans le premier mode d'affichage et que l'écran (7) comporte respectivement une zone d'affichage placée à l'intérieur des instruments ronds (9) est une zone d'affichage prévue entre les deux instruments ronds (9).

8. Dispositif d'affichage (2) selon la revendication 7, **caractérisé en ce que** les deux instruments ronds (9) ne sont pas affichés à la vue d'un observateur et que l'écran comprend au moins quatre zones d'affichage dans le second mode d'affichage, au moins les informations pouvant être affichées par un instrument rond (9) étant affichées de façon numérique dans une première zone d'affichage, les informations pouvant être affichées par l'écran à l'intérieur du premier instrument rond dans le second mode d'affichage étant affichées davantage à l'extérieur dans une troisième zone d'affichage, les informations affichées par l'écran à l'intérieur du second instrument rond dans le premier mode d'affichage étant affichées davantage à l'extérieur dans une troisième zone d'affichage et les informations affichées par l'écran (7) entre les deux instruments ronds (9) dans le premier mode d'affichage étant affichées dans une zone d'affichage plus grande dans une quatrième zone d'affichage.

9. Dispositif d'affichage (2) selon l'une quelconque des revendications précédentes, **caractérisé en ce qu'**un élément de commande couplé au dispositif de commande (4) est prévu, celui-ci permettant de passer du premier mode d'affichage dans le second mode d'affichage et inversement.

10. Dispositif d'affichage (2) selon l'une quelconque des revendications précédentes, **caractérisé en ce qu'**au moins un instrument rond (9) est une unité d'affichage électromécanique éclairée et/ou auto-éclairée et que la lumière formant cette unité d'affichage peut être représentée pour un observateur placé dans la zone de l'écran (7) à l'aide d'un dispositif de combinaison (10).

11. Dispositif d'affichage (2) selon la revendication 10, **caractérisé en ce qu'**un cache (12) est prévu à l'aide duquel l'au moins une unité d'affichage électromécanique peut être au moins en partie cachée, de sorte que l'instrument rond (9) formé par cette unité d'affichage n'est au moins en partie plus affiché à la vue d'un observateur placé dans la zone de l'écran (7).

12. Véhicule automobile doté d'un tableau de bord disposé à proximité du champ de vision du conducteur et comprenant le dispositif d'affichage (2) selon l'une quelconque des revendications précédentes.

13. Procédé d'affichage des informations concernant le fonctionnement d'un véhicule automobile (1) dans un véhicule automobile (1) à l'aide d'un dispositif d'affichage (2) doté d'un écran (7) et d'au moins un instrument rond (9) pouvant être affiché à la vue d'un observateur dans la zone de l'écran (7) ou sur l'écran (7), dans lequel :

l'au moins un instrument rond (9) est affiché à la vue de l'observateur dans un premier mode d'affichage du dispositif d'affichage (2) et l'écran (7) comporte une zone d'affichage située à l'intérieur de l'instrument rond (9)

EP 2 146 861 B1

et une zone d'affichage située à l'extérieur de l'instrument (9) ;
l'au moins un instrument rond (9) n'est pas affiché à la vue de l'observateur dans un second mode d'affichage du dispositif d'affichage (2), les informations pouvant être affichées par l'instrument rond (9) étant restituées sur l'écran (7) par le biais d'un affichage numérique et les informations affichées par l'écran (7) à l'intérieur de l'instrument (9) dans le premier mode d'affichage étant affichées dans une autre zone d'affichage de l'écran ; **caractérisé en ce que** :

un paramètre d'image est modifié lors du passage du premier mode d'affichage au second mode d'affichage, ledit paramètre étant calculé de la façon suivante :

$$P_{n+1} = P_n + (P_m - P_n) \cdot F$$

n étant un nombre entier naturel, $P_0$ la valeur du paramètre d'image des informations représentées à l'état de départ, $P_m$ une constante et la valeur du paramètre d'image des informations représentées à l'état final et F un paramètre de transformation, le paramètre de transformation étant compris entre 1 et 2.

14. Procédé selon la revendication 13, **caractérisé en ce qu'**au moins deux instruments ronds (9) sont affichés à la vue de l'observateur dans le second mode d'affichage et que l'écran (7) comporte respectivement une zone d'affichage située à l'intérieur des instruments ronds (9) est une zone d'affichage située entre les deux instruments ronds (9).

15. Procédé selon la revendication 14, **caractérisé en ce que** les deux instruments ronds (9) ne sont pas affichés à la vue de l'observateur dans le second mode affichage et que l'écran (7) comporte au moins quatre zones d'affichage dans le second mode d'affichage, au moins les informations pouvant être affichées par un instrument rond (9) étant affichées de façon numérique dans une première zone d'affichage, les informations affichées par l'écran à l'intérieur du premier instrument rond (9) dans le second mode d'affichage étant affichées davantage à l'extérieur dans une seconde zone d'affichage, les informations affichées par l'écran (7) à l'intérieur du second instrument rond (9) dans le premier mode d'affichage étant affichées davantage à l'extérieur dans une troisième zone d'affichage et les informations affichées par l'écran (7) entre les deux instruments ronds (9) dans le premier mode d'affichage étant affichées dans une zone d'affichage plus grande dans une quatrième zone d'affichage.

FIG. 1

FIG. 2

FIG. 3

FIG. 4A

FIG. 4B

FIG. 5A

FIG. 5B

FIG. 6

FIG. 7

F = 0,5

# FIG. 8

F = 1,3

FIG. 9

**EP 2 146 861 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4307367 A1
- DE 19902136 B4
- EP 1190886 A2
- EP 1559995 A1
- WO 03057522 A1
- US 4442424 A
- JP 10297318 A
- EP 1582393 A2
- WO 2005080139 A1